# EUROPEAN PATENT SPECIFICATION

(11) **EP 2 349 757 B1**
(45) Date of publication and mention of the grant of the patent: **03.12.2014**
(21) Application number: 09822273.0
(22) Date of filing: 19.10.2009
(51) Int. Cl.: B60H 1/32, B60H 1/00

(54) **METHOD AND SYSTEM FOR COOLING AND WARMING**
SYSTEM UND VERFAHREN ZUR KÜHLUNG UND ERWÄRMUNG
PROCÉDÉ ET SYSTÈME DE REFROIDISSEMENT ET DE RÉCHAUFFEMENT

(30) Priority: 21.10.2008 SE 0850045
(43) Date of publication of application: 03.08.2011
(73) Proprietor: Scania CV AB (publ), 151 87 Södertälje (SE)
(72) Inventor: HALL, Ola, S-117 67 Stockholm (SE)
(86) International application number: PCT/SE2009/051182
(87) International publication number: WO 2010/047649

(56) References cited:
- EP-A2- 1 164 035
- DE-A1-102004 008 210
- DE-A1-102006 042 788
- US-A- 4 061 186
- US-A- 5 421 169
- US-A1- 2002 014 330
- US-A1- 2004 050 089
- US-B1- 6 276 161

## Description

The present invention relates generally to compressor systems which have closed refrigerant circuits for cooling and warming purposes and comprise at least a condenser and an evaporator. The invention relates more specifically to a method and a system for cooling or warming the interior of a vehicle and particularly the driving space of a commercial vehicle, e.g. vehicles with tiltable cabs. The invention relates in particular to compressor systems which comprise a liquid-cooled condenser and evaporator and have a low-pressure circuit for conveying hot or cold liquid to the driving space.

### STATE OF THE ART

Known air conditioning systems in vehicles usually comprise a compressor, an air-cooled condenser situated at or near the front of the vehicle, an evaporator situated somewhere in the vehicle's cab, e.g. in or under the instrument panel, and pipelines or hoses which connect these components together to form a hermetically sealed and pressurised system which usually also comprises an expansion means and a dry filter or an accumulator. A number of different gases may be used as refrigerant but R134a is often used in vehicle applications.

Vehicles with tiltable cabs require longer hoses/lines and/or more connections to be able to connect the cooling element in the cab to other necessary parts of the cooling system which are usually situated in the vehicle's engine space. In such AC systems it is advantageous, and not unusual, that a further cooling loop, a so-called secondary loop, is used, i.e. that a further low-pressure cooling circuit with a liquid as thermal transfer medium is connected to the compressor system's evaporator via a liquid-based heat exchanger. The liquid, usually water or a mixture of water and glycol, is thus cooled in the refrigerant circuit's evaporator and is pumped up to the cab and to the cooling element therein situated, which in its turn cools the air of the cab by means of a fan. It is of course also possible to use other liquid-based coolants.

An AC system of said kind is therefore normally used for cooling the air in the cab, while a separate water-borne heating system is used for warming the cab air as necessary. This separate system is usually supplied with hot water/cooling water from the vehicle's engine. When the engine has been switched off for a while, however, the cooling water will have cooled so much that it is no longer possible for any hot water to be pumped to the cab element, with the result that the cab air can no longer be kept warm. The engine in a heavy vehicle has a large mass which needs warming up and the cooling water volume alone may be up to 100 litres. Even after the engine has been started, it therefore takes quite a while before its cooling water reaches such a temperature that it can be used effectively for warming the cab air. When the engine runs at no load, the temperature of the cooling water may also drop so much that the water becomes unusable for warming purposes. For these reasons it is advantageous to use instead a heat pump which can produce heat quickly when the need arises. The refrigerant circuit in a compressor system usually generates cold and heat almost immediately after starting and with an outer cooling circuit containing only a few litres of liquid it is possible to begin producing heat/cold quickly, within the order of a few minutes.

As it is desirable to keep down the number of components in a vehicle, for both economic and space reasons, it is advantageous if the pre-existing AC system can also be used as a heat pump. This can be done, for example, by reversing the flow in the refrigerant circuit. The problem with this is that reversing the refrigerant circuit, i.e. changing the direction of flow of the refrigerant, will not be fully effective, since a condenser functions less well as an evaporator and an evaporator functions less well as a condenser. The overall efficiency of the system will suffer.

Various systems and solutions for warming, for example, a tiltable driving cab by an AC system which can also be run as a heat pump, are prior art.

Specification WO2007/107535 refers to a system with two evaporators or condensers fitted in a vehicle cab. It is possible to choose whether none, one or more are to function as condensers and the others as evaporators. Thus the AC system may cool, warm or dry the air in the cab. The device will be relatively complicated and the flow will be alternated on the refrigerant side, i.e. in the pressurised refrigerant circuit.

US6928831 describes an AC system with combined condenser/gas cooler and evaporator which is usable as both cooling system and heat pump in vehicles. A directional valve "118" connects together the units "141" and "142". The engine's cooling water is used as heat source for the heat pump and the flow is alternated on the refrigerant side. That invention exhibits similarities with the aforesaid WO2007/107535.

DE102006042788 describes a solution for an air conditioner for a vehicle. The heat energy of the compressed and heated refrigerant from the compressor is introduced through the coolant heat exchanger in the coolant, an accelerated is achieved. The mechanical energy of the compressor is applied from the vehicle engine, and a quick heating of the vehicle engine is achieved.

DE102004008210 describe a method for operating a motor vehicle air conditioning system as a heat pump to provide interior heating with a cold engine.

Prior art thus does not show how the compressor system in a vehicle can be used effectively for both cooling and warming of, for example, a driving cab.

### OBJECTS AND MOST IMPORTANT CHARACTERISTICS OF THE INVENTION

The object of the invention is to solve said problems and provide a method and a system for effective cooling and/or warming of, for example, a vehicle cab, using the same refrigerant for both and without alternating or reversing the flow in the refrigerant circuit.

A further object of the invention is to keep down the number of components in the cooling/warming system and to provide a simple compact solution which is easy to accommodate in the vehicle.

These said and further advantages are achieved according to the invention by a method and a system according to the features indicated in claim 1.

The invention is effected principally by the outer low-pressure circuits of the system being connected together so that the condenser of the refrigerant circuit warms liquid which is supplied to the element in the vehicle's driving space, and the evaporator of the refrigerant circuit cools liquid which is released from the element.

The invention entails the refrigerant circuit, irrespective of whether cold or heat is to be supplied from the system and, for example, be transferred to the vehicle's driving space, being allowed to operate in a normal way whereby the condenser and the evaporator are used simply as condenser and evaporator irrespective of whether hot or cold water is to be produced. A condenser is in fact configured to function most effectively as a condenser, and an evaporator to function effectively as an evaporator.

The invention also entails the possibility of the flows in the system's secondary circuits being switched between AC operation and heat pump operation in such a way that liquid which is heated by the refrigerant circuit's condenser can be pumped to the cab element instead of the liquid which is cooled in the refrigerant circuit's evaporator.

The invention is achieved by the two secondary circuits being united, for heat pump operation, via a flow changeover switch, to form a common single circuit without changing the main direction of flow in any of the circuits.

Further features and advantages of the invention are indicated by the more detailed description of the invention set out below and the attached drawings and other claims.

### BRIEF LIST OF THE DRAWINGS

The invention is described below in more detail in the form of some preferred embodiment examples with reference to the attached drawings.
**Figure 1** depicts schematically a compressor system with two outer closed and separate liquid-based circuits for cooling and release of surplus heat respectively.
**Figure 2** depicts schematically the compressor system according to Figure 1 but with the outer secondary circuits reconnected in series with one another with the object of being able to deliver heat instead of cold to the driving space.
**Figure 3** depicts schematically the compressor system according to the invention according to Figure 2 for heat pump operation whereby the low-pressure radiator is bypassed by means of an alternatively configured valve.

### DESCRIPTION OF PREFERRED EMBODIMENTS

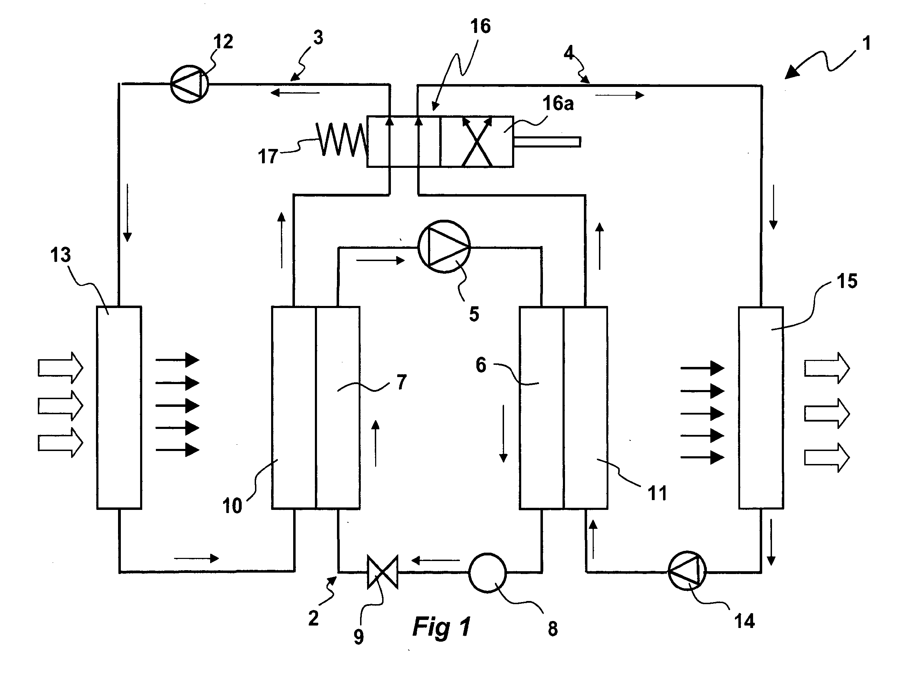

**Figure 1** depicts a compressor system **1 ,** connected for AC operation. The compressor system **1** comprises in this case three separate and distinct closed circuits, viz. the primary refrigerant circuit **2,** an element circuit **3** and a radiator circuit **4.**

The primary refrigerant circuit **2** is a hermetically sealed circuit and operates with a refrigerant, a gas, under pressure. The refrigerant circuit **2** comprises a compressor **5,** a condenser **6,** an evaporator **7,** a dry filter **8** and an expansion means **9,** and the components are connected to one another by a hose system or pipeline system. Heat is released in the condenser **6** and heat is absorbed in the evaporator **7.**

Both the evaporator **7** and the condenser **6** are each co-assembled with their respective liquid-based heat exchanger **10,11,** and the evaporator **7** is therefore heated by the liquid in the element circuit **3** and the condenser **6** is cooled by the liquid in the radiator circuit **4.**

The element circuit **3** comprises not only the heat exchanger **10** which is co-assembled with the evaporator **7** but also a first low-pressure pump **12** and an element **13** and operates with liquid at relatively low pressure. The element **13** is situated in a space which is to be warmed or cooled, e.g. in the interior or cab of a vehicle. Air is blown through the element **13** by an undepicted fan and the air which passes is warmed or cooled depending on the temperature of the liquid. The air in the cab is thus kept at, for example, a preset temperature.

The radiator circuit **4** comprises a low-pressure pump **14,** a heat exchanger **11** co-assembled with the refrigerant circuit's condenser **6** and a low-temperature radiator **15.** The radiator **15** is usually air-cooled and situated near to the front of the vehicle where the draught caused by vehicle movement may help to create an air flow through the radiator **15** so that heat exchange to the environment can take place when the vehicle is in motion. The engine's fan system may also be used for blowing air through the radiator **15.**

A flow changeover switch **16,** e.g. a two-position four-way valve **16a,** is adapted to controlling the coolant flows in the compressor system **1.** The valve **16a** may in this embodiment example be switched physically/manually between its two positions, against the action of a spring **17,** or electromechanically via an undepicted electrical circuit-breaker situated on, for example, the vehicle's instrument panel.

The valve **16a** is here depicted in a first functional position in which all of the circuits **2, 3, 4** are separated, distinct, from one another and the flows in the respective circuits **2,3,4** are provided by respective compressors or pumps **5,12,14** in the direction of the arrows.

The flow in the refrigerant circuit **2** is provided by the compressor **5** and passes from the compressor **5** through the condenser **6,** in which heat is released, via the dry filter **8** and the expansion means **9** to the evaporator **7,** in which heat is absorbed, and thereafter back to the compressor **5.**

The flow in the element circuit **3** is provided by the pump **12** and passes from the pump **12** through the element **13,** which may for example be situated in the vehicle's cab, where heat is absorbed, and proceeds to the heat exchanger **10** which is integrated with the refrigerant circuit's evaporator **7** and in which heat is released, and back to the pump **12** via the valve **16a.**

The flow in the radiator circuit **4** is provided by the pump **14** and passes via the heat exchanger **11** which is integrated with the refrigerant circuit's condenser **6** and in which heat is absorbed, and proceeds via the valve **16a** to the radiator **15,** in which surplus heat is released to the environment.

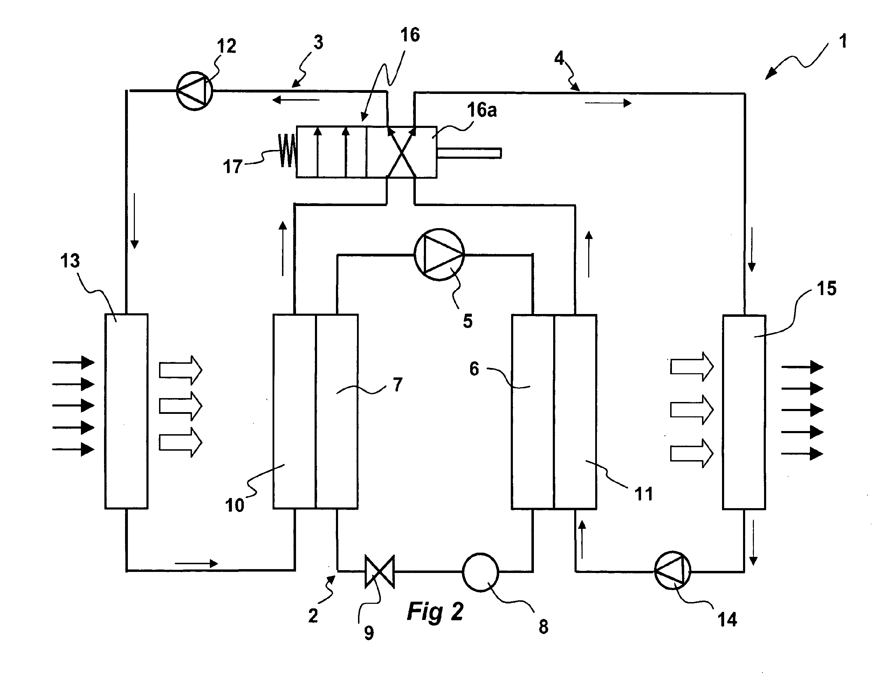

**Figure 2** depicts the same system as in Figure 1 but with the flow changeover switch, the valve **16a,** depicted in its second functional position, for heat pump operation, whereby the flow through the valve **16a** is here crossed instead. The flow is thus changed so that the secondary circuits, viz. the element circuit **3** and the radiator circuit **4** in Figure 1, are united to form a common single circuit. The components in the original two circuits here operate, as regards flow, in series with one another, and the pumps **12,14** cooperate with one another in a single flow. The primary refrigerant circuit **2,** however, is not affected at all, as the flow in it proceeds in a usual/normal manner. Nor is there any change in the direction of flow in the united circuit relative to the original flow of the circuits **3,4** during AC operation. The circuit formed in the second functional position of the valve **16a** carries a flow from the pump **14** through the heat exchanger **11,** through the valve **16a** and on to the pump **12,** the element **13,** the heat exchanger **10** and again through the valve **16a** to the radiator **15** and back to the pump **14.**

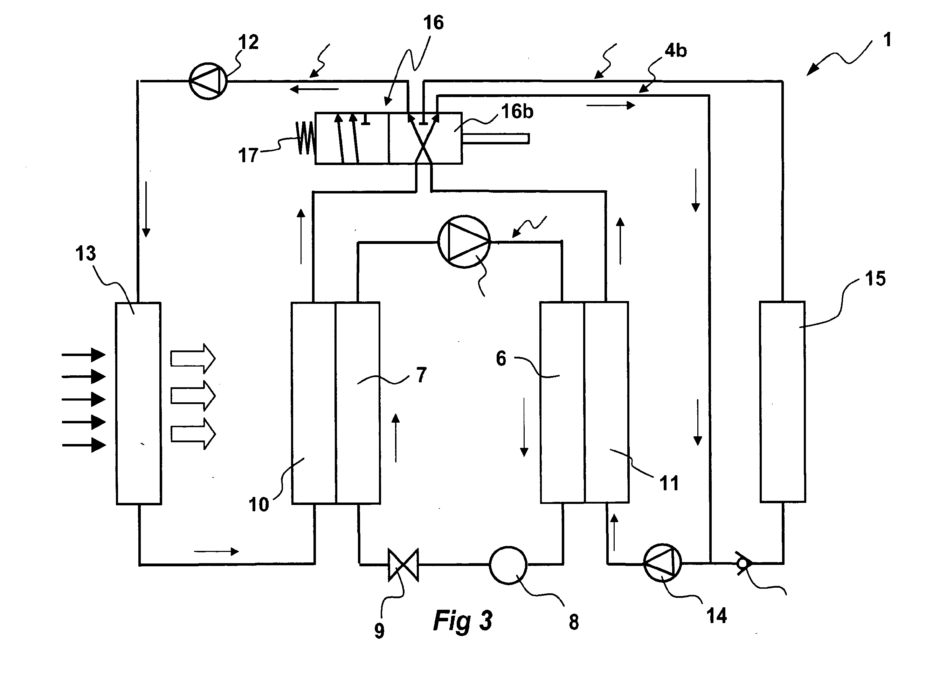

**Figure 3** depicts a compressor system **1** according to the invention. If much power is extracted from the evaporator **7** when the compressor system **1** is run as a heat pump, the coolant will become colder and the low pressure in the refrigerant circuit **2** will become low. In this situation, the coolant in the radiator **15** will be warmed, since it will be colder than the ambient temperature of the radiator **15.** Low temperature results in low pressure and low mass flow in the refrigerant circuit **2,** which is less good. If only a small amount of power is extracted from the evaporator **7,** the low pressure may rise, with a corresponding rise in the high pressure in the refrigerant circuit. This will result in a warmer condenser **6** and warmer liquid leaving the heat exchanger **11,** which is good if a vehicle cab needs warming. If on the contrary the liquid leaving the heat exchanger **10** of the evaporator **7** is warmer than the surroundings, the energy will be cooled away in the radiator **15.** By bypassing the radiator **15,** part of the energy in the system is thus retained and the pressure may gradually rise. Using another flow changeover switch, e.g. a valve **16b** comprising a further connection path, makes it possible to disconnect the radiator **15** from the circuit. In such cases, a hose or pipeline is connected from the valve **16b** directly to the suction side of the radiator circuit's pump **14.** Bypassing the radiator **15** makes it possible for the liquid to gradually warm up in order to raise the temperature after the heat exchanger **11** of the condenser **6,** thereby achieving more power in the system. A check valve **17** may possibly be used to prevent liquid from reaching the radiator **15** the back way.

When the liquid in the low-pressure circuits **3,4** warms up, it expands and it is therefore necessary to connect some form of expansion tank to the system. Air or gas from the circuits may also need to be vented. The two circuits **3,4** may therefore with advantage be connected to an expansion tank by hoses or pipelines of small diameter. It is perfectly possible to use a common single expansion tank for the two circuits **3,4.** This is prior art and is not referred to or described in more detail here.

The invention is described above with respect to various preferred embodiments. The invention is of course not limited to those embodiments, which are only to be regarded as examples. Other variants of the invention are therefore also perfectly possible within the scope of protection under the attached claims. Thus it is possible that the refrigerant circuit may also comprise one or more internal heat exchangers. It is also possible for the evaporator and the condenser to be mutually co-assembled with the object of creating a compact unit which can supply both warm and cold liquid for cooling and heating purposes. The flow changeover switch may of course be configured in various ways for controlling the flows of the circuits. It is for example conceivable for the valve to have three positions so that the flow can be controlled in such a way that in one position each circuit is separate, in a second position the circuits are connected together in series and the radiator is part of the circuit, and in a third position the circuits are connected together in series but the radiator is bypassed.

## Claims

1. A system for combined cooling and warming, comprising a refrigerant circuit (2) with at least a compressor (5), a liquid-cooled condenser (6), a liquid-heated evaporator (7) and two outer secondary circuits (3,4), an element circuit and a radiator circuit (4), which element circuit (3) comprises an element (13) situated in the space which is to be cooled or warmed, whereby the element circuit (3) and the radiator circuit (4) constitute during AC operation mutually separate circuits with flows separated from one another,
**characterised**
- **in that** a flow changeover switch (16) is adapted to connecting the element circuit (3) and the radiator circuit (4) together for heat pump operation so that the condenser (6) of the refrigerant circuit (2) warms liquid which is supplied to the element (13), and the evaporator (7) of the refrigerant circuit (2) cools liquid which is released from the element (13), which flow changeover switch (16) takes the form of a valve (16a, 16b), and that the valve (16b) is adapted to causing the flow in the radiator (4b) to bypass the radiator (15),
- **in that** the flow changeover switch (16) is adapted to connecting the element circuit (13) and the radiator circuit (4) together for heat pump operation so that they form a single circuit with a common flow.

2. A system according to claim 1,
**characterised**
- **in that** the element (13) is adapted during heat pump operation to releasing heat, with no change in the direction of flow in the refrigerant circuit (2).

3. A system according to any one of claims 1-2,
**characterised**
- **in that** the element (13) is adapted during heat pump operation to releasing heat with no changes in the directions of flow through the compressor (5) and pumps 12,14).

4. A system according to any one of claims 1-3,
**characterised**
- **in that** the flow changeover switch (16) is adapted during heat pump operation to connecting in series the element circuit (3) and the radiator circuit (4).

## Patentansprüche

1. System zum kombinierten Kühlen und Heizen, umfassend einen Kühlkreislauf (2) mit zumindest einem Kompressor (5), einen flüssigkeitsgekühlten Kondensator (6), einen flüssigkeitsbeheizten Verdampfer (7) und zwei äußere Sekundärkreisläufe (3, 4), einen Komponentenkreislauf und einen Radiatorkreislauf (4), wobei der Komponentenkreislauf (3) eine in dem zu kühlenden oder zu heizenden Raum positionierte Komponente (13) umfasst, und wobei der Komponentenkreislauf (3) und der Radiatorkreislauf (4) während eines Klimaanlagenbetriebs voneinander getrennte Kreisläufe mit voneinander getrennten Strömungen bilden, **dadurch gekennzeichnet,**
- **dass** ein Strömungsumschalter (16) dazu eingerichtet ist, den Komponentenkreislauf (3) und den Radiatorkreislauf (4) in einem Wärmepumpenbetrieb zu verbinden, so dass der Kondensator (6) des Kühlkreislaufs (2) eine der Komponente (13) zugespeiste Rüssigkeit erwärmt, und der Verdampfer (7) des Kühlkreislaufs (2) eine von der Komponente (13) freigesetzte Rüssigkeit kühlt, wobei der Strömungsumschalter (16) in Form eines Ventils (16a, 16b) bereitgestellt ist, und wobei das Ventil (16b) dazu eingerichtet ist, zu bewirken, dass die Strömung in dem Radiator (4b) den Radiator (15) überbrückt,
- **dass** der Strömungsumschalter (16) dazu eingerichtet ist, den Komponentenkreislauf (13) und den Radiatorkreislauf (4) in dem Wärmepumpenbetrieb zu verbinden, so dass diese einen gemeinsamen Kreislauf mit einer gemeinsamen Strömung bilden.

2. System nach Anspruch 1,
**dadurch gekennzeichnet,**
- **dass** die Komponente (13) während des Wärmepumpenbetriebs dazu eingerichtet ist, Wärme ohne eine Richtungsänderung der Strömung im Kühlkreislauf (2) freizusetzen.

3. System nach einem der Ansprüche 1-2,
**dadurch gekennzeichnet,**
- **dass** die Komponente (13) während des Wärmepumpenbetriebs dazu eingerichtet ist, Wärme ohne Richtungsänderungen der durch den Kompressor (5) und die Pumpen (12, 14) verlaufenden Strömung freizusetzen.

4. System nach einem der Ansprüche 1-3,
**dadurch gekennzeichnet,**
- **dass** der Strömungsumschalter (16) während des Wärmepumpenbetriebs dazu eingerichtet ist, den Komponentenkreislauf (3) und den Radiatorkreislauf (4) in Reihe zu schalten.

## Revendications

1. Système de refroidissement et de chauffage combinés, comprenant un circuit de réfrigérant (2) pourvu d'au moins un compresseur (5), un condenseur (6) refroidi par liquide, un évaporateur (7) réchauffé par liquide et deux circuits secondaires extérieurs (3, 4), un circuit d'élément et un circuit de radiateur (4), lequel circuit d'élément (3) comprend un élément (13) situé dans l'espace à refroidir ou à réchauffer, le circuit d'élément (3) et le circuit de radiateur (4) formant, durant le fonctionnement en courant alternatif, des circuits mutuellement séparés ayant des écoulements séparés,
**caractérisé**
- **en ce qu'**un commutateur de débit (16) est conçu pour connecter le circuit d'élément (3) et le circuit de radiateur (4) entre eux pour le fonctionnement de la pompe à chaleur de telle sorte que le condenseur (6) du circuit de réfrigérant (2) réchauffe le liquide qui est alimenté à l'élément (13), et l'évaporateur (7) du circuit de réfrigérant (2) refroidit le liquide qui est libéré par l'élément (13), lequel commutateur de débit (16) prend la forme d'un distributeur (16a, 16b), et en ce que le distributeur (16b) est conçue pour amener l'écoulement présent dans le radiateur (4b) à contourner le radiateur (15),
- **en ce que** le commutateur de débit (16) est conçu pour connecter le circuit d'élément (3) et le circuit de radiateur (4) entre eux pour le fonctionnement de la pompe à chaleur de façon à former un circuit unique ayant un écoulement commun.

2. Système selon la revendication 1,
**caractérisé**
- **en ce que** l'élément (13) est conçu pour libérer de la chaleur pendant le fonctionnement de la pompe à chaleur, sans modification de la direction de l'écoulement dans le circuit de réfrigérant (2).

3. Système selon l'une quelconque des revendications 1-2,
**caractérisé**
- **en ce que** l'élément (13) est conçu pour libérer de la chaleur pendant le fonctionnement de la pompe à chaleur, sans modification des directions d'écoulement à travers le compresseur (5) et les pompes (12, 14).

4. Système selon l'une quelconque des revendications 1-3,
**caractérisé**
- **en ce que** le commutateur de débit (16) est conçu pour connecter en série le circuit d'élément (3) et le circuit de radiateur (4) pendant le fonctionnement de la pompe à chaleur.
